# EUROPEAN PATENT APPLICATION

(11) **EP 3 270 657 A1**
(43) Date of publication of application: **17.01.2018**
(21) Application number: 15884206.2
(22) Date of filing: 09.03.2015
(51) Int. Cl.: H04W 88/02, H04M 1/02, G06F 3/00, H01Q 1/24, H04B 5/00

(54) **REGION PROMPTING METHOD AND TERMINAL**

(71) Applicant: Huawei Technologies Co., Ltd., Longgang District Shenzhen, Guangdong 518129 (CN)
(72) Inventor: MEI, Jingqing, Shenzhen Guangdong 518129 (CN)
(74) Representative: Epping - Hermann - Fischer
(86) International application number: PCT/CN2015/073868
(87) International publication number: WO 2016/141523

(57) **Abstract**

The present invention relates to the communications field, provides a region prompt method and a terminal, so as to display an NFC antenna region of the terminal, thereby reducing a difficulty of NFC matching between terminals, and also reducing a difficulty of performing NFC between the terminals. The method includes: obtaining region information of an NFC antenna when it is determined that a terminal needs to perform near field communication NFC; and displaying an NFC antenna region corresponding to the region information on a screen of the terminal.

## Description

### TECHNICAL FIELD

The present invention relates to the communications field, and in particular, to a region prompt method and a terminal.

### BACKGROUND

When a terminal is used for NFC (Near Field Communication, near field communication), first, an NFC antenna of the terminal and an NFC antenna of a peer device need to be aligned for matching, so as to ensure effective communication. Because a percentage of an effective area of an NFC antenna to an area of a terminal is quite small, and locations of NFC antennas of different terminals are quite different, a terminal needs to move back and forth to align an NFC antenna region of the terminal with an NFC antenna region of a peer, to ensure successful matching of two terminals.

It is apparent that, in the prior art, it is relatively difficult to perform NFC matching between terminals, and a difficulty of performing NFC between terminals is also increased.

### SUMMARY

Embodiments of the present invention provide a region prompt method and a terminal, so as to display an NFC antenna region of the terminal, thereby reducing a difficulty of NFC matching between terminals, and also reducing a difficulty of performing NFC between the terminals.

To achieve the foregoing objective, the following technical solutions are used in the embodiments of the present invention.

According to a first aspect, a region prompt method is provided, including:
obtaining region information of a near field communication NFC antenna; and
displaying, when it is determined that the terminal needs to perform NFC, an NFC antenna region corresponding to the region information on a screen of the terminal.

With reference to the first aspect, in a first possible implementation manner of the first aspect, the determining that the terminal needs to perform NFC specifically includes: determining that the terminal needs to perform NFC when an application of the terminal is in an operating state, the application calls an NFC application programming interface API of the terminal, and an NFC function of the terminal is enabled; or
determining that the terminal needs to perform NFC when an NFC function of the terminal is enabled, and a voltage of the NFC antenna deviates from a preset value.

With reference to the first aspect or the first possible implementation manner of the first aspect, in a second possible implementation manner of the first aspect, the obtaining region information of an NFC antenna specifically includes:
querying whether there is the region information in a local storage system of the terminal; and
if there is the region information, obtaining the region information from the local storage system of the terminal; or
if there is not the region information, querying system information of the terminal, and obtaining a model number of the terminal; and
querying a cloud server according to the model number, and obtaining NFC antenna region information corresponding to the model number as the region information.

With reference to the first aspect or the first possible implementation manner of the first aspect or the second possible implementation manner of the first aspect, in a third possible implementation manner of the first aspect, after the displaying the region corresponding to the NFC antenna on the screen of the terminal, the method further includes:
displaying a center point of the NFC antenna region.

With reference to the first aspect, in a fourth possible implementation manner of the first aspect, the method further includes: if the NFC antenna region corresponding to the region information goes beyond the screen of the terminal, displaying a direction of the NFC antenna region corresponding to the region information on the screen of the terminal.

With reference to the first aspect, in a fifth possible implementation manner of the first aspect, the method further includes: when it is detected that an NFC function of the terminal is disabled, removing the NFC antenna region displayed on the screen of the terminal; or
when it is detected that the application stops calling an NFC API of the terminal, and that other applications except the application in the terminal do not call the NFC API of the terminal, removing the NFC antenna region displayed on the screen of the terminal; or
when it is detected that a voltage of the NFC antenna is the preset value, and does not change within a preset time, removing the NFC antenna region displayed on the screen of the terminal.

According to a second aspect, a terminal is provided, including:
an obtaining unit, configured to obtain region information of a near field communication NFC antenna;
a determining unit, configured to determine whether the terminal needs to perform NFC; and
a display control unit, configured to display, when the determining unit determines that the terminal needs to perform NFC, an NFC antenna region corresponding to the region information on the screen of the terminal.

With reference to the second aspect, in a first possible implementation manner of the second aspect, the determining unit is specifically configured to: determine that the terminal needs to perform NFC when an application of the terminal is in an operating state, the application calls an NFC application programming interface API of the terminal, and an NFC function of the terminal is enabled; or
determine that the terminal needs to perform NFC when an NFC function of the terminal is enabled, and a voltage of the NFC antenna deviates from a preset value.

With reference to the second aspect or the first possible implementation manner of the second aspect, in a second possible implementation manner of the second aspect, the obtaining unit is specifically configured to query whether there is the region information in a local storage system of the terminal; and
if there is the region information, obtain the region information from the local storage system of the terminal; or
if there is not the region information, query system information of the terminal, and obtain a model number of the terminal; and
query a cloud server according to the model number, and obtain NFC antenna region information corresponding to the model number as the region information.

With reference to the second aspect or the first possible implementation manner of the second aspect or the second possible implementation manner of the second aspect, in a third possible implementation manner of the second aspect, the display control unit is further configured to display a center point of the NFC antenna region after displaying the region corresponding to the NFC antenna on the screen of the terminal.

With reference to the second aspect, in a fourth possible implementation manner of the second aspect, the display control unit is further configured to: if the NFC antenna region corresponding to the region information goes beyond the screen of the terminal, display a direction of the NFC antenna region corresponding to the region information on the screen of the terminal.

With reference to the second aspect, in a fifth possible implementation manner of the second aspect, the display control unit is further configured to: when it is detected that an NFC function of the terminal is disabled, remove the NFC antenna region displayed on the screen of the terminal; or
when it is detected that the application stops calling an NFC API of the terminal, and that other applications except the application in the terminal do not call the NFC API of the terminal, remove the NFC antenna region displayed on the screen of the terminal; or
when it is detected that a voltage of the NFC antenna is the preset value, and does not change within a preset time, remove the NFC antenna region displayed on the screen of the terminal.

The present invention provides a region prompt method and a terminal, and when it is determined that the terminal needs to perform near field communication NFC, region information of an NFC antenna is obtained. An NFC antenna region corresponding to the region information is displayed on a screen of the terminal. Compared with the prior art in which an NFC antenna region of a terminal cannot be known, a difficulty of NFC matching is relatively high, and a difficulty of performing NFC between terminals is relatively high, the method and the terminal provided in the present invention can reduce a difficulty of NFC matching between terminals, thereby making it simple and convenient to perform NFC between the terminals.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a region prompt method according to Embodiment 1 of the present invention;
FIG. 2 is an effect drawing of a location of an NFC antenna region according to Embodiment 1 of the present invention;
FIG. 3 is an effect drawing of a direction of an NFC antenna region according to Embodiment 1 of the present invention;
FIG. 4 is a structural block diagram of a terminal according to Embodiment 2 of the present invention; and
FIG. 5 is a structural block diagram of a terminal according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

NFC evolves from RFID (Radio Frequency Identification, radio frequency identification), and is based on RFID and an interconnection technology. NFC is a short-range (within 20 cm) and high-frequency (at a frequency of 13.56 MHz) radio technology. In NFC, an active reading mode and a passive reading mode are used, and a working frequency is 13.56 MHz.

By means of the NFC technology, a function of an inductive card reader, a function of an inductive card, and a point-to-point function are integrated in a single chip, and identification and data exchange can be performed with a compatible device (that is, a device supporting NFC) within a short range. An NFC terminal is a terminal having an NFC module, and the terminal having an NFC module may perform multiple NFC applications. For example, a specialized SIM card of the NFC technology is installed in a mobile phone that supports an NFC function, so that micropayment such as bus or metro card swiping, supermarket, and catering may be implemented by swiping the mobile phone (that is, using the mobile phone close to a card reader, like swiping a bus card). A principle is that an NFC module is also installed in the card reader. When a user uses an NFC mobile phone close to a card reader, identification may be performed by using the card reader, and data exchange may be performed after matching is successful, thereby implementing payment by swiping the mobile phone.

### Embodiment 1

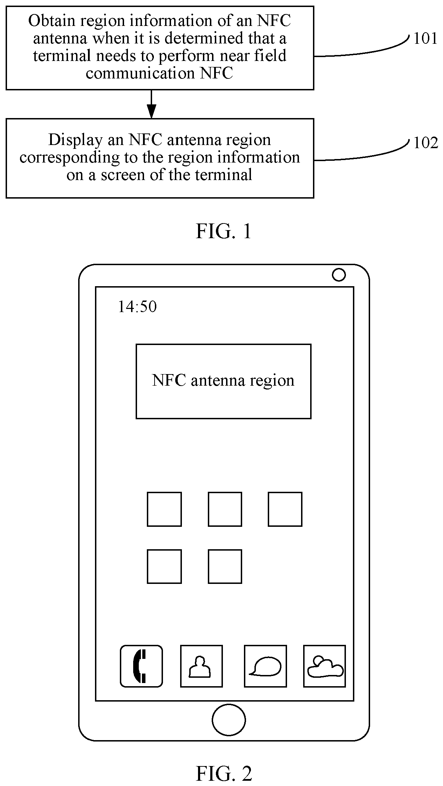

This embodiment of the present invention provides a region prompt method that is executed by a terminal. As shown in FIG. 1, the method includes the following steps.

101: Obtain region information of an NFC antenna when the terminal determines that the terminal needs to perform near field communication NFC.

The terminal may be a mobile phone or a tablet computer that supports NFC.

It should be noted that, an NFC requester terminal is a terminal that supports NFC and runs in the terminal, and the terminal attempts to establish an NFC connection to another terminal. The another terminal is an NFC response. Whether a terminal needs to perform NFC is determined specifically in the following two determining manners.
1. If the terminal actively performs NFC (that is, an NFC requester), when an application of the terminal is in an operating state, the application calls an NFC API (Application Programming Interface, application programming interface) of the terminal, and an NFC function of the terminal is enabled, it is determined that the terminal needs to perform NFC.
   The application may be any application installed in the terminal. The application is in an operating state, that is, the terminal enables the application. When an application installed in the terminal supports NFC (for example, a card simulation application, a card reader application, or a P2P (Peer to Peer, peer-to-peer network) application), the application is enabled in the terminal, and the NFC API of the terminal needs to be called when NFC needs to be performed. Certainly, an application that does not support NFC does not perform NFC and does not call the NFC API of the terminal either.
2. If the terminal passively accepts NFC (that is, an NFC responder), when the NFC function of the terminal is enabled, and a voltage of the NFC antenna changes, it is determined that the terminal needs to perform NFC.

Generally, before the NFC antenna detects a radio frequency field, the voltage of the NFC antenna is always a preset value, where the preset value may be a normal voltage of the NFC antenna, and the preset value may be zero or another value, and is not limited herein. When the NFC antenna detects an RF Field (Radio Frequency Field, radio frequency field) of 13.56 MHz, the voltage of the NFC antenna deviates from the preset value. Certainly, it may be determined that the terminal needs to perform NFC only when the NFC antenna can always detect the RF Field of 13.56 MHz within a time period. The time period herein may be an empirical value, and is not limited herein. It should be noted that, when the NFC antenna enters an RF Field of 13.56 MHz, a voltage change is formed on the NFC antenna. The RF Field may be detected by detecting the voltage change. In addition, when the NFC antenna detects the RF Field of 13.56 MHz, if a voltage change of the antenna reaches a threshold, an NFCC (Near Field Communication Controller, near field communication controller) sends a notification to a DH (Device Host, device host), to inform the DH that the RF Field is detected.

In an embodiment, the obtaining, by the terminal, region information of an NFC antenna specifically includes: querying whether there is the region information in a local storage system of the terminal; and if the local storage system of the terminal stores the region information, obtaining the region information from the local storage system of the terminal; or
if the local storage system of the terminal does not store the region information, querying system information of the terminal and obtaining a model number of the terminal; and querying a cloud server according to the model number, and obtaining NFC antenna region information corresponding to the model number as the region information.

It should be noted that, the region information may be N groups of XY coordinate values relative to a screen of the terminal, and the terminal may determine a region according to the N groups of XY coordinate values. Generally, it may be considered that there are two axes on the screen of the terminal: axis X and axis Y. Each pixel on the screen uniquely corresponds to one group of XY coordinate value. For example, XY coordinate values of pixels on a screen with a resolution of 1080*720 may range from (0, 0) to (720, 1080). For example, a region in which an NFC antenna is located is projected as a rectangle onto the screen of the terminal, and if XY coordinate values of four boundary points of the rectangle are (200, 300), (200, 700), (420, 300), and (420, 700), a size and a location of the rectangle on the screen can be known. Alternatively, a shape of the NFC antenna region is not a rectangle, and instead of describing a location and a size of the region by means of boundary points, an XY coordinate value of each point at a boundary is described, and therefore the region can also be displayed on the screen of the terminal.

N is set according to an actual situation. For example, an NFC antenna corresponds to a triangle on the screen of the terminal, where N may be set to 3. The terminal may display a triangular region on the screen according to the three groups of XY coordinate values, and the triangular region is an NFC antenna region of the terminal.

102: Display an NFC antenna region corresponding to the region information on a screen of the terminal.

During specific implementation, the terminal may determine a region on the screen according to N groups of XY coordinate values in the region information, and display the region on the screen in form of a picture. The region is an NFC antenna region of the terminal.

For example, as shown in FIG. 2, an NFC antenna region displayed on a terminal may be a rectangle.

Certainly, a shape of an NFC antenna region displayed on the terminal is not limited, and may be any shape. Displaying an NFC antenna region on the terminal is to make it convenient for a user to enable NFC antenna regions of two terminals to be in touch with each other, so as to rapidly and accurately implement NFC matching, thereby greatly improving convenience of performing NFC between the terminals.

It should be noted that the terminal may further display a center point of the NFC antenna region. After a schematic region of an entire antenna is displayed, a center point of the antenna or a position that is the most suitable for alignment is displayed, so as to help a user perform a touch operation.

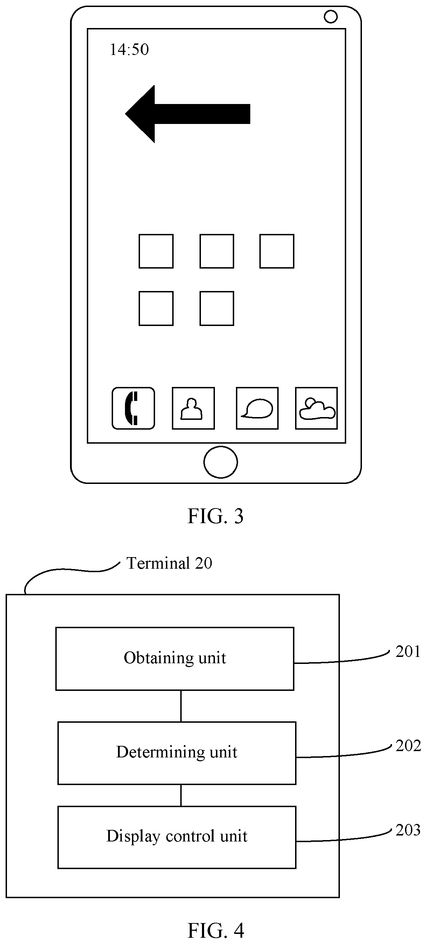

In addition, if the NFC antenna region corresponding to the region information goes beyond the screen of the terminal, a direction of the NFC antenna region corresponding to the region information is displayed on the screen of the terminal. For example, as shown in FIG. 3, an arrow or the like may be used for labeling, to remind a user of a direction of an NFC antenna region of the terminal.

Further, the method may further include: removing, by the terminal, the NFC antenna region displayed on the screen, that is, stopping displaying the NFC antenna region.

Specifically, a situation in which the terminal removes the displayed NFC antenna region may be determined in the following two determining manners.

Manner 1. If the terminal is an NFC requester, when the application calling an NFC API of the terminal stops calling the NFC API of the terminal, and other applications except the application in the terminal do not call the NFC API of the terminal, the NFC antenna region displayed on the screen of the terminal is removed. It should be noted that, when the application calling the NFC API of the terminal stops calling the NFC API of the terminal, but another application in the terminal calls the NFC API of the terminal, the NFC antenna region displayed on the screen of the terminal is not removed.

Alternatively, the terminal removes, when it is detected that an NFC function of the terminal is disabled, the NFC antenna region displayed on the screen of the terminal.

A user may disable the NFC function of the terminal by clicking a UI icon corresponding to an NFC function switch, that is, turning off the NFC function switch. If the terminal is an NFC responder, when the terminal detects that a voltage of the NFC antenna is equal to a preset value, and is always equal to the preset value within a preset time (that is, the NFC antenna does not detect an RF Field of 13.56 MHz within the preset time, and the voltage of the NFC antenna does not change within the preset time), the NFC antenna region displayed on the screen of the terminal is removed. Alternatively, the terminal removes, when it is detected that an NFC function switch of the terminal is turned off, the NFC antenna region displayed on the screen of the terminal. The preset time may be set according to actual requirements. This is not specifically limited in the present invention. Preferably, the preset time is a few minutes.

The present invention provides a region prompt method, and when it is determined that the terminal needs to perform near field communication NFC, region information of an NFC antenna is obtained. An NFC antenna region corresponding to the region information is displayed on a screen of the terminal. Compared with the prior art in which an NFC antenna region of a terminal cannot be known, a difficulty of NFC matching is relatively high, and a difficulty of performing NFC between terminals is relatively high, the method provided in the present invention can reduce a difficulty of NFC matching between terminals, thereby making it simple and convenient to perform NFC between the terminals.

### Embodiment 2

This embodiment of the present invention provides a terminal 20. As shown in FIG. 4, the terminal 20 includes: an obtaining unit 201, a determining unit 202, and a display control unit 203.

The obtaining unit 201 is configured to obtain region information of an NFC antenna.

The determining unit 202 is configured to determine whether the terminal needs to perform NFC.

The display control unit 203 is configured to display, when the determining unit 202 determines that the terminal needs to perform NFC, an NFC antenna region corresponding to the region information on a screen of the terminal.

The determining unit 202 is specifically configured to: determine that the terminal needs to perform NFC when an application of the terminal is in an operating state, the application calls an NFC application programming interface API of the terminal, and an NFC function of the terminal is enabled.

Alternatively, the determining unit 202 is specifically configured to: determine that the terminal needs to perform NFC when an NFC function of the terminal is enabled, and a voltage of the NFC antenna deviates from a preset value.

The obtaining unit 201 is specifically configured to: query whether there is the region information in a local storage system of the terminal; and if there is the region information, obtain the region information from the local storage system of the terminal; or
if there is not the region information, query system information of the terminal, and obtain a model number of the terminal; and query a cloud server according to the model number, and obtain NFC antenna region information corresponding to the model number as the region information.

The display control unit 203 is further configured to display, after displaying a region corresponding to the NFC antenna on the screen of the terminal, a center point of the NFC antenna region.

The display control unit 203 is further configured to: if the NFC antenna region corresponding to the region information goes beyond the screen of the terminal, display a direction of the NFC antenna region corresponding to the region information on the screen of the terminal.

The display control unit 203 is further configured to remove, when it is detected that the NFC function of the terminal is disabled, the NFC antenna region displayed on the screen of the terminal.

Alternatively, the display control unit 203 is further configured to: when it is detected that the application stops calling an NFC API of the terminal, and that other applications except the application in the terminal do not call the NFC API of the terminal, remove the NFC antenna region displayed on the screen of the terminal.

Alternatively, the display control unit 203 is further configured to: when it is detected that a voltage of the NFC antenna is the preset value, and does not change within a preset time, remove the NFC antenna region displayed on the screen of the terminal.

The present invention provides a terminal, and when it is determined that the terminal needs to perform near field communication NFC, region information of an NFC antenna is obtained. An NFC antenna region corresponding to the region information is displayed on a screen of the terminal. Compared with the prior art in which an NFC antenna region of a terminal cannot be known, a difficulty of NFC matching is relatively high, and a difficulty of performing NFC between terminals is relatively high, the terminal provided in the present invention can reduce a difficulty of NFC matching between terminals, thereby making it simple and convenient to perform NFC between the terminals.

### Embodiment 3

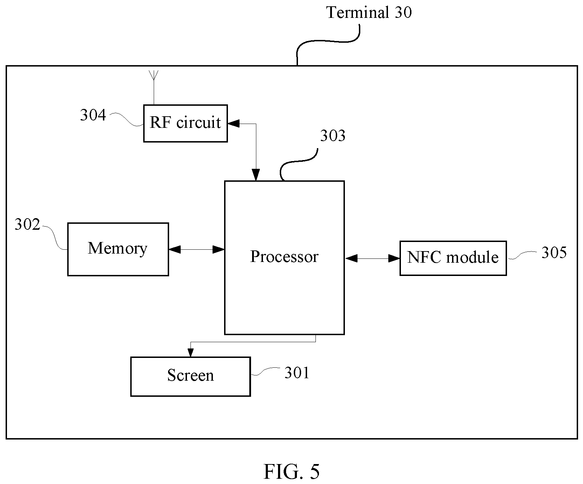

FIG. 5 is a structural diagram of a terminal 30 according to this embodiment of the present invention. The terminal 30 provided in this embodiment of the present invention may be configured to implement the method shown in the foregoing method embodiment. For convenience of description, merely a part related to this embodiment of the present invention is shown. Refer to description in the foregoing method embodiment for specific technical details that are not disclosed.

The terminal may be a mobile phone, a tablet computer, a notebook computer, a UMPC (Ultra-mobile Personal Computer, ultra-mobile personal computer), a netbook, a PDA (Personal Digital Assistant, personal digital assistant), and the like. In this embodiment of the present invention, an example in which the terminal is a mobile phone is used for description.

As shown in FIG. 5, the terminal 30 includes components such as a screen 301, a memory 302, and a processor 303. A person skilled in the art may understand that a terminal structure shown in FIG. 5 constitutes no limitation to the terminal, and the terminal may include more or fewer components than those shown in the figure, or some components may be combined, or a different component deployment may be used.

The following specifically describes components of the terminal 30 with reference to FIG. 5.

The screen 301 may be a display panel. The screen 301 can receive a command sent from the processor 303 and execute the command, and provide, according to the command from the processor 303, corresponding visual output on the screen 301. In addition, the screen 301 may be multiple types of touchscreens, such as a resistive touchscreen, a capacitive touchscreen, an infrared touchscreen, and a surface acoustic wave touchscreen, or may be screens in a non-touchscreen form.

The memory 302 may be configured to store data, a software program, and a module, and mainly include a program storage area and a data storage area. The program storage area may store an operating system, an application program required by at least one function (such as a sound playback function and an image playback function), and the like. The data storage area may store data (such as audio data, image data, and a phone book) created according to use of the terminal 30. In addition, the memory 302 may include a high-speed random access memory, and may also include a non-volatile memory such as at least one disk storage component, a flash memory component, or another volatile solid-state storage component.

The processor 303 is a control center of the terminal 30, and is connected to various parts of the entire terminal by using various interfaces and wires. By running or executing the software program and/or module stored in the memory 302, and invoking data stored in the memory 302, the processor 303 performs various functions of the terminal 30 and processes data, thereby performing overall monitoring on the terminal. Optionally, the processor 303 may include one or more processing units. Preferably, the processor 303 may integrate an application processor and a modem processor. The application processor mainly processes an operating system, a user interface, an application program, and the like. The modem processor mainly processes wireless communication. It may be understood that the foregoing modem processor may be not integrated in the processor 303.

An RF circuit 304 may be configured to receive and send signals in an information receiving and sending process or a call process. Particularly, the RF circuit 304 receives downlink information from a base station, then delivers the downlink information to the processor 380 for processing, and additionally sends uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 304 may further communicate with a network and another device by means of wireless communication. The wireless communication may use any communications standard or protocol, including but not limited to: GSM (global system of mobile communication, Global System for Mobile Communications), GPRS (general packet radio service, General Packet Radio Service), CDMA (code division multiple access, Code Division Multiple Access), WCDMA (wideband code division multiple access, Wideband Code Division Multiple Access), LTE (long term evolution, Long Term Evolution), E-mail, SMS (short messaging service, Short Message Service), and the like. When an NFC antenna detects an RF Field that is of 13.56 MHz and that is generated by the RF circuit 304, and a voltage change of the antenna reaches a threshold, an NFCC sends a notification to a DH, to inform the DH that the RF Field is detected.

The terminal 30 further includes an NFC module 305, to implement an NFC function of the terminal.

In an embodiment, the processor 303 is configured to obtain region information of an NFC antenna.

The processor 303 is further configured to determine whether the terminal needs to perform NFC.

The processor 303 is further configured to send, when it is determined that the terminal needs to perform NFC, a command to the screen 301, so as to display an NFC antenna region corresponding to the region information on the screen 301.

In an embodiment, the determining, by the processor 303, whether the terminal needs to perform NFC specifically includes: determining that the terminal needs to perform NFC when an application of the terminal is in an operating state, the application calls an NFC application programming interface API of the terminal, and an NFC function of the terminal is enabled.

Alternatively, the determining, by the processor 303, whether the terminal needs to perform NFC specifically includes: determining that the terminal needs to perform NFC when an NFC function of the terminal is enabled, and a voltage of the NFC antenna deviates from a preset value.

The obtaining, by the processor 303, region information of an NFC antenna specifically includes: querying whether there is the region information in a local storage system of the terminal; and if there is the region information, obtaining the region information from the local storage system of the terminal; or
if there is not the region information, querying system information of the terminal, and obtaining a model number of the terminal; and querying a cloud server according to the model number, and obtaining NFC antenna region information corresponding to the model number as the region information.

The processor 303 is further configured to send, after displaying a region corresponding to the NFC antenna on the screen of the terminal, a command to the screen 301, so as to display a center point of the NFC antenna region on the screen 301.

The processor 303 is further configured to: if the NFC antenna region corresponding to the region information goes beyond the screen of the terminal, send a command to the screen 301, so as to display a direction of the NFC antenna region corresponding to the region information on the screen 301 of the terminal.

The processor 303 is further configured to send a command to the screen 301 when it is detected that the NFC function of the terminal is disabled, so as to remove the NFC antenna region displayed on the screen 301, that is, not displaying the NFC antenna region on the screen 301.

Alternatively, the processor 303 is further configured to send a command to the screen 301 when it is detected that the application stops calling an NFC API of the terminal, and that other applications except the application in the terminal do not call the NFC API of the terminal, so as to remove the NFC antenna region displayed on the screen 301.

Alternatively, the processor 303 is further configured to: send a command to the screen 301 when it is detected that a voltage of the NFC antenna is the preset value, and does not change within a preset time, so as to remove the NFC antenna region displayed on the screen 301.

The present invention provides a terminal, and when it is determined that the terminal needs to perform near field communication NFC, region information of an NFC antenna is obtained. An NFC antenna region corresponding to the region information is displayed on a screen of the terminal. Compared with the prior art in which an NFC antenna region of a terminal cannot be known, a difficulty of NFC matching is relatively high, and a difficulty of performing NFC between terminals is relatively high, the terminal provided in the present invention can reduce a difficulty of NFC matching between terminals, thereby making it simple and convenient to perform NFC between the terminals.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A region prompt method, applied to a terminal, comprising:
obtaining region information of a near field communication NFC antenna; and
displaying, when it is determined that the terminal needs to perform NFC, an NFC antenna region corresponding to the region information on a screen of the terminal.

2. The method according to claim 1, wherein the determining that the terminal needs to perform NFC specifically comprises: determining that the terminal needs to perform NFC when an application of the terminal is in an operating state, the application calls an NFC application programming interface API of the terminal, and an NFC function of the terminal is enabled; or
determining that the terminal needs to perform NFC when an NFC function of the terminal is enabled, and a voltage of the NFC antenna deviates from a preset value.

3. The method according to claim 1 or 2, wherein the obtaining region information of an NFC antenna specifically comprises:
querying whether there is the region information in a local storage system of the terminal; and
if there is the region information, obtaining the region information from the local storage system of the terminal; or
if there is not the region information, querying system information of the terminal, and obtaining a model number of the terminal; and
querying a cloud server according to the model number, and obtaining NFC antenna region information corresponding to the model number as the region information.

4. The method according to any one of claims 1 to 3, wherein after the displaying a region corresponding to the NFC antenna on a screen of the terminal, the method further comprises:
displaying a center point of the NFC antenna region.

5. The method according to claim 1, wherein the method further comprises:
if the NFC antenna region corresponding to the region information goes beyond the screen of the terminal, displaying a direction of the NFC antenna region corresponding to the region information on the screen of the terminal.

6. The method according to claim 1, wherein the method further comprises:
when it is detected that the NFC function of the terminal is disabled, removing the NFC antenna region displayed on the screen of the terminal; or
when it is detected that the application stops calling an NFC API of the terminal, and that other applications except the application in the terminal do not call the NFC API of the terminal, removing the NFC antenna region displayed on the screen of the terminal; or
when it is detected that a voltage of the NFC antenna is the preset value, and does not change within a preset time, removing the NFC antenna region displayed on the screen of the terminal.

7. A terminal, comprising:
an obtaining unit, configured to obtain region information of a near field communication NFC antenna;
a determining unit, configured to determine whether the terminal needs to perform NFC; and
a display control unit, configured to display, when the determining unit determines that the terminal needs to perform NFC, an NFC antenna region corresponding to the region information on the screen of the terminal.

8. The terminal according to claim 7, wherein the determining unit is specifically configured to determine that the terminal needs to perform NFC when an application of the terminal is in an operating state, the application calls an NFC application programming interface API of the terminal, and an NFC function of the terminal is enabled; or
determine that the terminal needs to perform NFC when an NFC function of the terminal is enabled, and a voltage of the NFC antenna deviates from a preset value.

9. The terminal according to claim 7 or 8, wherein the obtaining unit is specifically configured to query whether there is the region information in a local storage system of the terminal; and
if there is the region information, obtain the region information from the local storage system of the terminal; or
if there is not the region information, query system information of the terminal, and obtain a model number of the terminal; and
query a cloud server according to the model number, and obtain NFC antenna region information corresponding to the model number as the region information.

10. The terminal according to any one of claims 7 to 9, wherein the display control unit is further configured to display a center point of the NFC antenna region after displaying the region corresponding to the NFC antenna on the screen of the terminal.

11. The terminal according to claim 7, wherein the display control unit is further configured to: if the NFC antenna region corresponding to the region information goes beyond the screen of the terminal, display a direction of the NFC antenna region corresponding to the region information on the screen of the terminal.

12. The terminal according to claim 7, wherein the display control unit is further configured to: when it is detected that an NFC function of the terminal is disabled, remove the NFC antenna region displayed on the screen of the terminal; or
when it is detected that the application stops calling an NFC API of the terminal, and that other applications except the application in the terminal do not call the NFC API of the terminal, remove the NFC antenna region displayed on the screen of the terminal; or
when it is detected that a voltage of the NFC antenna is the preset value, and does not change within a preset time, remove the NFC antenna region displayed on the screen of the terminal.

13. A terminal, comprising:
a processor, configured to obtain region information of a near field communication NFC antenna; and determine whether the terminal needs to perform NFC, wherein
the processor is further configured to: when the terminal needs to perform NFC, send a command to a screen of the terminal, so as to display an NFC antenna region corresponding to the region information on the screen.

14. The terminal according to claim 13, wherein the determining whether the terminal needs to perform NFC specifically comprises: determining that the terminal needs to perform NFC when an application of the terminal is in an operating state, the application calls an NFC application programming interface API of the terminal, and an NFC function of the terminal is enabled; or
determining that the terminal needs to perform NFC when an NFC function of the terminal is enabled, and a voltage of the NFC antenna deviates from a preset value.

15. The terminal according to claim 13 or 14, wherein the obtaining region information of an NFC antenna specifically comprises: querying whether there is the region information in a local storage system of the terminal; and
if there is the region information, obtaining the region information from the local storage system of the terminal; or
if there is not the region information, querying system information of the terminal, and obtaining a model number of the terminal; and
querying a cloud server according to the model number, and obtaining NFC antenna region information corresponding to the model number as the region information.

16. The terminal according to any one of claims 13 to 15, wherein the processor is further configured to send a command to the screen after displaying the region corresponding to the NFC antenna on the screen of the terminal, so as to display a center point of the NFC antenna region on the screen.

17. The terminal according to claim 13, wherein the processor is further configured to: send a command to the screen when the NFC antenna region corresponding to the region information goes beyond the screen of the terminal, so as to display a direction of the NFC antenna region corresponding to the region information on the screen.

18. The terminal according to claim 13, wherein the processor is further configured to: send a command to the screen when it is detected that an NFC function of the terminal is disabled, so as to remove the NFC antenna region displayed on the screen; or
send a command to the screen when it is detected that the application stops calling an NFC API of the terminal, and that other applications except the application in the terminal do not call the NFC API of the terminal, so as to remove the NFC antenna region displayed on the screen; or
send a command to the screen when it is detected that a voltage of the NFC antenna is the preset value, and does not change within a preset time, so as to remove the NFC antenna region displayed on the screen.
